# EUROPEAN PATENT APPLICATION

(11) **EP 4 693 082 A1**
(43) Date of publication of application: **11.02.2026**
(21) Application number: 24791866.7
(22) Date of filing: 03.04.2024
(51) Int. Cl.: G06F 21/53

(54) **DATA PROCESSING METHOD AND APPARATUS, AND COMPUTER-READABLE STORAGE MEDIUM**

(30) Priority: 20.04.2023 CN 202310459024
(71) Applicant: Huawei Technologies Co., Ltd., Shenzhen, Guangdong 518129 (CN)
(72) Inventor: XU, Xiangyi, Shenzhen, Guangdong 518129 (CN); WU, Yongzheng, Shenzhen, Guangdong 518129 (CN); WANG, Chenyu, Shenzhen, Guangdong 518129 (CN)
(74) Representative: Maiwald GmbH
(86) International application number: PCT/CN2024/086078
(87) International publication number: WO 2024/217281

(57) **Abstract**

This application provides a data processing method and apparatus, and a computer-readable storage medium, which may be applied to a computing device. A hardware resource of the computing device is divided into (rich execution environment, REE) and (trusted execution environment, TEE) sides. The method includes the following steps: A processor of a computing device obtains to-be-processed data on the REE side, and then runs a target virtual machine (virtual machine, VM) on the TEE side to process the to-be-processed data. The target VM is any one of one or more VMs included on the TEE side. The method can reduce a risk that a VM is attacked by a hacker, and improve security of user data.

## Description

This application claims priority to Chinese Patent Application No. 202310459024.2, filed with the China National Intellectual Property Administration on April 20, 2023, and entitled "DATA PROCESSING METHOD AND APPARATUS, AND COMPUTER-READABLE STORAGE MEDIUM", which is incorporated herein by reference in its entirety.

### TECHNICAL FIELD

This application relates to the field of virtualization technologies, and in particular, to a data processing method and apparatus, and a computer-readable storage medium.

### BACKGROUND

Virtual machine (virtual machine, VM) is a complete computer system that is simulated by using software, has functions of a complete hardware system, and runs in an entirely isolated environment. All work that can be completed in a computing device (such as a server or an intelligent terminal device) can be implemented in a virtual machine. When a virtual machine is created on a computing device, a part of a hard disk and a part of a memory capacity of a physical machine need to be used as a hard disk and a memory capacity of the virtual machine. Each virtual machine has an independent hard disk and operating system. A user of the virtual machine can operate the virtual machine as the user uses a computing device.

Currently, a virtual machine in a computing device is easily maliciously attacked by a hacker, and consequently, security of user data cannot be ensured.

### SUMMARY

This application provides a data processing method and apparatus, and a computer-readable storage medium, to reduce a risk that a virtual machine is attacked by a hacker, and improve security of user data.

According to a first aspect, a data processing method is provided, applied to a computing device. A hardware resource of the computing device is divided into an REE side and a TEE side. The method includes the following steps: A processor of the computing device obtains to-be-processed data on the REE side, and then runs a target VM on the TEE side to process the to-be-processed data. The target VM is any one of one or more VMs included on the TEE side.

In the foregoing solution, the TEE side includes one or more VMs. After obtaining to-be-processed data of a user on the REE side, the processor runs the VM on the TEE side to process the to-be-processed data. Security on the TEE side is higher than that on the REE side. Therefore, a risk that a confidential VM is maliciously attacked by a hacker can be reduced, and security of user data can be improved.

In a possible implementation, before the processor obtains the to-be-processed data on the REE side, the method provided in the first aspect further includes the following steps: The processor obtains configuration information of a to-be-created target VM on the REE side, and then creates the target VM on the TEE side based on the configuration information.

In a possible implementation, the method provided in the first aspect or any one of the possible implementations of the first aspect further includes the following steps: The processor obtains the first data through simulation on the REE side, the processor injects the first data into the target VM, and then the processor runs the target VM on the TEE side based on the first data. The first data includes one or any combination of the following: a virtual interrupt of the target VM, a virtual clock for use by the target VM, and an MMIO register for use by the target VM.

In this implementation, the processor obtains, through simulation on the REE side, the virtual interrupt of the target VM, the virtual clock for use by the target VM, and the MMIO register for use by the target VM, instead of performing simulation on the TEE side. As a result, a trusted computing base (trusted computing base, TCB) on the TEE side may be lighter and thinner.

In a possible implementation, before the processor runs the target VM on the TEE side, the method provided in the first aspect or any one of the possible implementations of the first aspect further includes the following step: The processor determines integrity of the target VM.

Specifically, the processor may provide, on the REE side, the configuration information of the target VM, version information of an operating system installed on the target VM, a name of an APP, and the like for the user to perform integrity check, to ensure that the target VM meets an expectation of the user, and further improve security of user data.

In a possible implementation, before the processor runs the target VM on the TEE side, the method provided in the first aspect or any one of the possible implementations of the first aspect further includes the following step: The processor determines validity of the computing device.

Specifically, the processor may provide, on the TEE side, a certificate of the computing device for the user to perform validity check, to ensure that the computing device meets an expectation of the user, and further improve security of user data.

In a possible implementation, when a specification of the target VM is changed, the method provided in the first aspect or any one of the possible implementations of the first aspect further includes the following step: The processor determines validity of the target VM whose specification is changed.

In a possible implementation, the method provided in the first aspect or any one of the possible implementations of the first aspect further includes the following steps: The processor obtains, on the REE side, a first management command for a life cycle of the target VM, and then performs, on the TEE side based on the first management command, one or any combination of the following operations on the target VM: power-on, power-off, specification change, migration, and release.

In this implementation, the life cycle of the VM on the TEE side can be managed.

In a possible implementation, the method provided the first aspect or any one of the possible implementations of the first aspect further includes the following steps: The processor obtains, on the REE side, a second management command for the target VM, and then performs, on the TEE side based on the second management command, one or any combination of the following operations on the target VM: installing an application, starting the application, closing the application, upgrading the application, and uninstalling the application.

In this implementation, the application of the VM on the TEE side can be managed.

In a possible implementation, the method provided in the first aspect or any one of the possible implementations of the first aspect further includes the following steps: When an exception occurs in the target VM, the processor establishes a context of the target VM on the TEE side, and then handles the exception that occurs in the target VM. After the processor completes handling of the exception that occurs in the target VM, the processor restores the context of the target VM to the target VM, to resume running of the target VM.

In a possible implementation, the method provided in the first aspect or any one of the possible implementations of the first aspect further includes the following step: The processor performs one or any combination of the following operations on the TEE side: creating, altering, or destroying a 2-stage page table of the target VM, where the 2-stage page table of the target VM is a page table in which a virtual address of the target VM is mapped to an intermediate address and the intermediate address is mapped to a physical address.

In this implementation, the 2-stage page table of the VM on the TEE side can be managed.

In a possible implementation, the method provided in the first aspect or any one of the possible implementations of the first aspect further includes the following step: The processor provides, on the REE side, a processing result for a user, where the processing result is obtained by the processor by running the target VM on the TEE side to process the to-be-processed data.

In a possible implementation, the configuration information includes information about a memory allocated to the target VM and virtual processor core information, an operating system kernel, and a file system that are for use by the target VM.

The processor may specifically create the target VM on the TEE side based on the configuration information in the following manner: The processor divides a memory resource on the TEE side to obtain a first memory that matches the memory information and is for use by the target VM, obtains, through simulation on the TEE side, a virtual processor core that matches the virtual processor core information and is for use by the target VM, and stores the operating system kernel and the file system in the first memory.

In this implementation, the VM on the TEE side can be created.

In a possible implementation, the processor may specifically store the operating system kernel and the file system in the first memory in the following manner: The processor determines, on the REE side, an address of the first memory based on an address of a memory resource on the REE side and a first offset, where the first offset is an offset between the address of the memory resource on the REE side and the address of the first memory; and then the processor stores, on the TEE side, the operating system kernel and the file system in the first memory based on the address of the first memory.

In a possible implementation, before the processor divides the memory resource on the TEE side to obtain the first memory that matches the first memory information and is for use by the target VM, the method provided in the first aspect or any one of the possible implementations of the first aspect further includes the following step: The processor divides a memory resource of the computing device to obtain a memory resource on the TEE side.

In this implementation, the memory resource of the computing device is not statically divided during startup, but is dynamically divided by the processor. When a specific quantity of VMs occupy all of a dynamically divided memory resource on the TEE side and a new VM needs to be created, the processor may re-divide the memory resource of the computing device. In this way, the re-divided memory resource on the TEE side can meet a memory requirement of the created VM, and also meet a memory requirement of the to-be-created new VM, thereby effectively reducing memory management complexity.

Optionally, when a specific quantity of VMs have occupied all of a dynamically divided memory resource on the TEE side and a new VM needs to be created, the processor may also determine whether there is a free memory in the memory resource on the REE side, and when there is the free memory, a part or all of the free memory is allocated to the TEE side. Then a memory that can be used by the new VM is allocated from the part or all of the free memory on the TEE side. In this way, memory management complexity can also be reduced.

In a possible implementation, a first hypervisor is deployed on the REE side, a second hypervisor is deployed on the TEE side, an operation performed by the processor on the REE side is performed by the processor by running the first hypervisor, and an operation performed by the processor on the TEE side is performed by the processor by running the second hypervisor.

According to a second aspect, a data processing apparatus is provided, and the data processing apparatus is applied to a computing device. A hardware resource of the computing device is divided into an REE side and a TEE side, and the apparatus includes:
an obtaining module, configured to obtain to-be-processed data on the REE side; and
a processing module, configured to run a target VM on the TEE side to process the to-be-processed data, where the target VM is any one of one or more VMs included on the TEE side.

In a possible implementation, the obtaining module is configured to obtain, on the REE side, configuration information of a to-be-created target VM. The processing module is further configured to create the target VM on the TEE side based on the configuration information.

In a possible implementation, the processing module is configured to obtain the first data through simulation on the REE side, where the first data includes one or any combination of the following: a virtual interrupt of the target VM, a virtual clock for use by the target VM, and an MMIO register for use by the target VM. The processing module is configured to inject the first data into the target VM. The processing module is configured to run the target VM on the TEE side based on the first data.

In a possible implementation, the data processing apparatus provided in the second aspect or any one of the possible implementations of the second aspect further includes a first verification module, configured to determine integrity of the target VM.

In a possible implementation, the data processing apparatus provided in the second aspect or any one of the possible implementations of the second aspect further includes a second verification module, configured to determine validity of the computing device.

In a possible implementation, when a specification of the target VM is changed, the first verification module is further configured to determine validity of the target VM whose specification is changed.

In a possible implementation, the obtaining module is configured to obtain, on the REE side, a first management command for a life cycle of the target VM. The processing module is further configured to perform, on the TEE side based on the first management command, one or any combination of the following operations on the target VM: power-on, power-off, specification change, migration, and release.

In a possible implementation, the obtaining module is configured to obtain, on the REE side, a second management command for the target VM. The processing module is further configured to perform, on the TEE side based on the second management command, one or any combination of the following operations on the target VM: installing an application, starting the application, closing the application, upgrading the application, and uninstalling the application.

In a possible implementation, the processing module is further configured to: when an exception occurs in the target VM, establish a context of the target VM on the TEE side; handle the exception that occurs in the target VM; and after completing handling of the exception that occurs in the target VM, restore the context of the target VM to the target VM, to resume running of the target VM.

In a possible implementation, the processing module is further configured to perform one or any combination of the following operations on the TEE side: creating, altering, or destroying a 2-stage page table of the target VM, where the 2-stage page table of the target VM is a page table in which a virtual address of the target VM is mapped to an intermediate address and the intermediate address is mapped to a physical address.

In a possible implementation, the processing module is further configured to provide, on the REE side, a processing result for a user, where the processing result is obtained by the processor by running the target VM on the TEE side to process the to-be-processed data.

In a possible implementation, the configuration information includes information about a memory allocated to the target VM and virtual processor core information, an operating system kernel, and a file system that are for use by the target VM. The processing module is specifically configured to: divide a memory resource on the TEE side to obtain a first memory that matches the memory information and is for use by the target VM, obtain, through simulation on the TEE side, a virtual processor core that matches the virtual processor core information and is for use by the target VM, and store the operating system kernel and the file system in the first memory.

In a possible implementation, the processing module is specifically configured to: determine, on the REE side, an address of the first memory based on an address of a memory resource on the REE side and a first offset, where the first offset is an offset between the address of the memory resource on the REE side and the address of the first memory; and store, on the TEE side, the operating system kernel and the file system in the first memory based on the address of the first memory.

In a possible implementation, the processing module is further configured to divide a memory resource of the computing device to obtain a memory resource on the TEE side.

For related beneficial effects and descriptions of the data processing apparatus provided in the second aspect and any one of the implementations of the second aspect, refer to the related beneficial effects and descriptions of the first aspect and any one of the implementations of the first aspect. Details are not described herein again.

According to a third aspect, a computing device is provided. The computing device includes a processor and a storage, and the processor is configured to execute instructions stored in the storage, to enable the computing device to implement the method provided in the first aspect or any one of the possible implementations of the first aspect.

According to a fourth aspect, a computer-readable storage medium is provided. The computer-readable storage medium stores instructions, and the instructions are used to implement the method provided in the first aspect or any one of the possible implementations of the first aspect.

According to a fifth aspect, a computer program product is provided. The computer program product includes a computer program. When the computer program is read and executed by a computing device, the computing device is enabled to perform the method provided in the first aspect or any one of the possible implementations of the first aspect.

### BRIEF DESCRIPTION OF DRAWINGS

FIG. 1 is a diagram of a hardware architecture of an ARM processor according to an embodiment of this application;
FIG. 2 is a schematic flowchart of stage-2 translation according to an embodiment of this application;
FIG. 3 is a diagram of a structure of an ARM architecture-based server according to an embodiment of this application;
FIG. 4 is a diagram of a structure of an ARM architecture-based intelligent terminal according to an embodiment of this application;
FIG. 5 is a diagram of a structure of a computing device according to an embodiment of this application;
FIG. 6 is a schematic flowchart of a data processing method according to an embodiment of this application;
FIG. 7 is a diagram of an offset between an address of a memory resource on an REE side and an address of a memory corresponding to a confidential VM according to an embodiment of this application;
FIG. 8 is a diagram of a structure of another computing device according to an embodiment of this application;
FIG. 9 is a diagram of a process of creating and running a confidential VM from a perspective of a first hypervisor according to an embodiment of this application;
FIG. 10 is a diagram of a structure of an example of a data processing apparatus according to an embodiment of this application; and
FIG. 11 is a diagram of a structure of still another computing device according to an embodiment of this application.

### DESCRIPTION OF EMBODIMENTS

The following describes technical solutions of this application with reference to the accompanying drawings.

To make the technical solutions provided in this application clearer, related terms are first explained.
(1) A normal VM is a VM included on a rich execution environment (rich execution environment, REE) side.
(2) A confidential VM is a VM included on a trusted execution environment (trusted execution environment, TEE) side.

With continuous improvement of performance of an advanced reduced instruction set computer machine (advanced RISC machine, ARM) processor, a computing device (such as a server or an intelligent terminal device) running an ARM processor brings great convenience to people's life. In addition, the computing device carries an increasing amount of user data, and a user pays more attention to security of the computing device. On the ARM processor, a current mainstream system-level solution is a TrustZone (TrustZone) technology.

As a security extension, the TrustZone technology is first introduced in an ARMv6 version. The TrustZone technology divides a hardware resource of a computing device into two worlds: an REE side (which may also be referred to as a normal world (normal world)) and a TEE side (which may also be referred to as a secure world (secure world)). As a hardware security feature, the TrustZone technology works on the TEE side.

The REE side does not mean that an operating system (operating system, OS) or software running on the REE side is malicious, but that security of an environment in which the REE side is located is lower than that of the TEE side. When the processor works on the REE side, access to resources (such as a register, a memory, a cache (cache), and a peripheral) on the TEE side is forbidden. Once the processor attempts to access these resources, the system directly crashes. For example, the TrustZone technology may set a sensitive memory as a secure memory (secure memory) by configuring a trustzone address space controller (trustzone address space controller, TZASC) register and a trustzone memory adapter (trustzone memory adapter, TZMA) register. As a result, the REE side cannot access the memory. When the processor works on the TEE side, the processor can access both a resource on the TEE side and a resource on the REE side. Because the TEE side has a higher permission than the operating system on the REE side, the TrustZone technology may be used as a root of trust to provide a higher-level security protection solution for the operating system on the REE side.

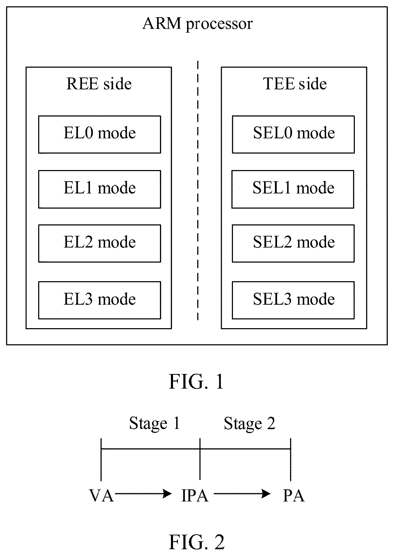

FIG. 1 describes a hardware architecture of ARMv8.4. An architecture on an REE side is shown on the left side, and an architecture on a TEE side is shown on the right side. The REE side includes four working modes: exception level 0 (exception level 0, EL0) mode, EL1 mode, EL2 mode, and EL3 mode. The TEE side also includes four working modes: security exception level 0 (secure exception level 0, SEL0) mode, SEL1 mode, SEL2 mode, and SEL3 mode. The EL0 mode may also be referred to as a user mode, the EL1 mode may also be referred to as a kernel mode, the EL2 mode may also be referred to as a hypervisor (hypervisor) mode, and the EL3 mode may also be referred to as a monitoring mode. A larger value indicates a higher exception level, and a smaller value indicates a lower exception level.

An operating system closely related to a user runs in the EL0 mode and the EL1 mode on the REE side or the SEL0 mode and the SEL1 mode on the TEE side, and a hypervisor (for example, a hypervisor or a kernel-based virtual machine (kernel-based virtual machine, KVM)) runs in the EL2/SEL2 mode, ARM trusted firmware runs in the EL3/SEL3 mode, and the ARM trusted firmware (ARM trusted firmware, ATF) is the first thing to run when a processor is started. The ARM trusted firmware may provide many services, for example, platform initialization, installation of a trusted operating system, and routing of a command in the EL3 mode.

To support memory virtualization, ARM introduces a memory virtualization technology of stage-2 translation (stage-2 translation). By using the technology, as shown in FIG. 2, a common one stage of memory address translation from a virtual address (virtual address, VA) to a physical address (physical address, PA) is converted into two stages of memory address translation from a VA to an intermediate physical address (intermediate physical address, IPA), which may also be referred to as an intermediate address, and then from the IPA to the PA. The stage-2 translation (IPA->PA) process is completely controlled by the hypervisor and is transparent to the operating system. For the operating system, the IPA is the "physical address" used by the operating system. The hypervisor may perform access control on memory access to the operating system by setting an attribute of a stage-2 translation page table entry (page table descriptor) access monitoring bit. The page table entry includes three control bits: read (R), write (W), and execute (X). The read control bit and the write control bit are related to data protection of a memory, and the execution control bit is related to memory code execution. By configuring the read control bit, the write control bit, and the execute control bit, the hypervisor can monitor access to a physical memory at a granularity of a page, thereby protecting related sensitive information.

The foregoing describes the ARM processor, and the following describes an application scenario in embodiments of this application.

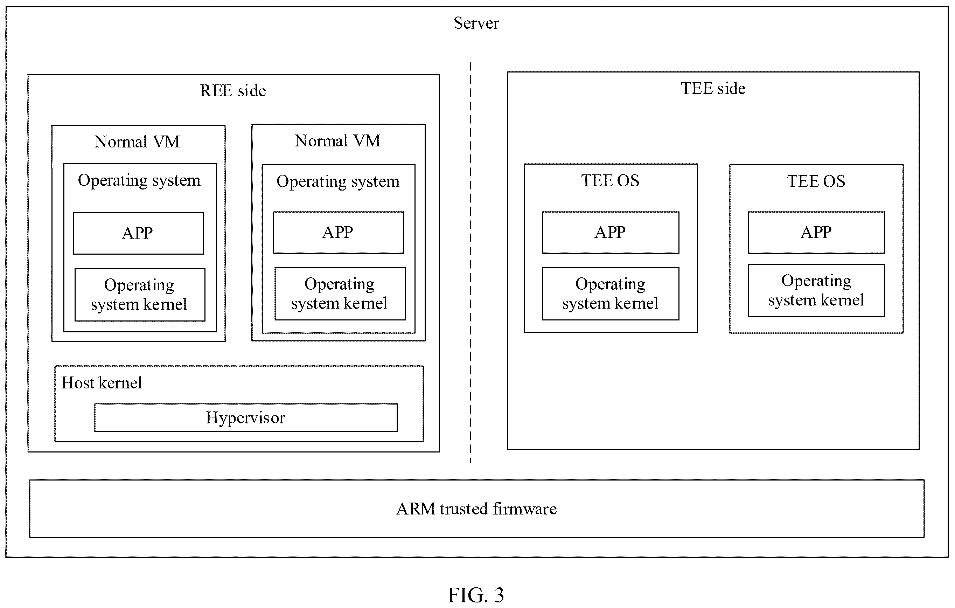

Scenario 1: A method provided in embodiments of this application can be applied to an ARM architecture-based server scenario. As shown in FIG. 3, in this scenario, both an REE side and a TEE side support a hardware virtualization feature, and a tenant establishes a plurality of normal VMs on the REE side (in FIG. 3, an example in which the REE side includes two normal VMs is used). An operating system is installed in each normal VM, the operating system includes an operating system kernel (kernel), an application (application, APP) may be installed in the operating system, and a hypervisor is configured to manage the plurality of normal VMs. One or more TEE operating systems (TEE OS) are installed on the TEE side (in FIG. 3, an example in which the TEE side includes two TEE OSs is used). The TEE OS also includes an operating system kernel, and an APP may be installed in the TEE OS. To provide support of the TEE, when a normal VM is started, a TEE OS is correspondingly run on the TEE side, to support a security service in the normal VM. During running, an APP in the normal VM requests a security service of an APP in the corresponding TEE OS.

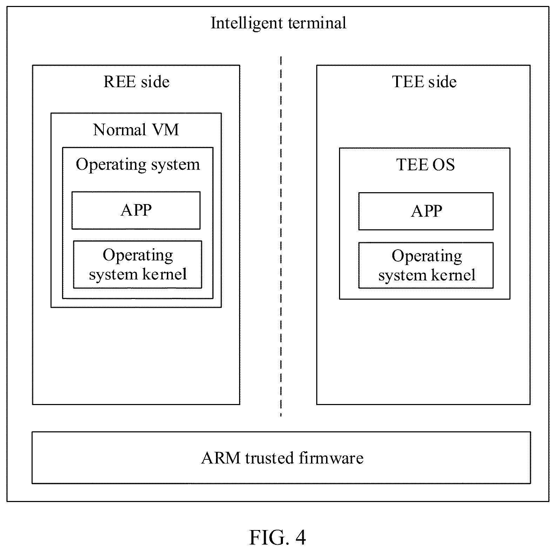

Scenario 2: A method provided in embodiments of this application can also be applied to an ARM architecture-based intelligent terminal scenario (for example, a portable device such as a smartphone). As shown in FIG. 4, in the intelligent terminal scenario, although a requirement for starting a plurality of VMs on an REE side is not strong, after a memory virtualization feature on the REE side is enabled, it may be considered that an operating system that is on the REE side and that is closely related to a user runs on a normal VM. In this way, interaction between the REE and a TEE may also be considered as interaction between the normal VM and the TEE.

In Scenario 1 and Scenario 2, when processing a user service, the VM is easily attacked by a hacker, and security of user data cannot be ensured. A computing device and a data processing method provided in embodiments of this application may be used to reduce a risk that a VM is attacked by a hacker, and improve security of user data. The following describes the computing device and the data processing method provided in embodiments of this application.

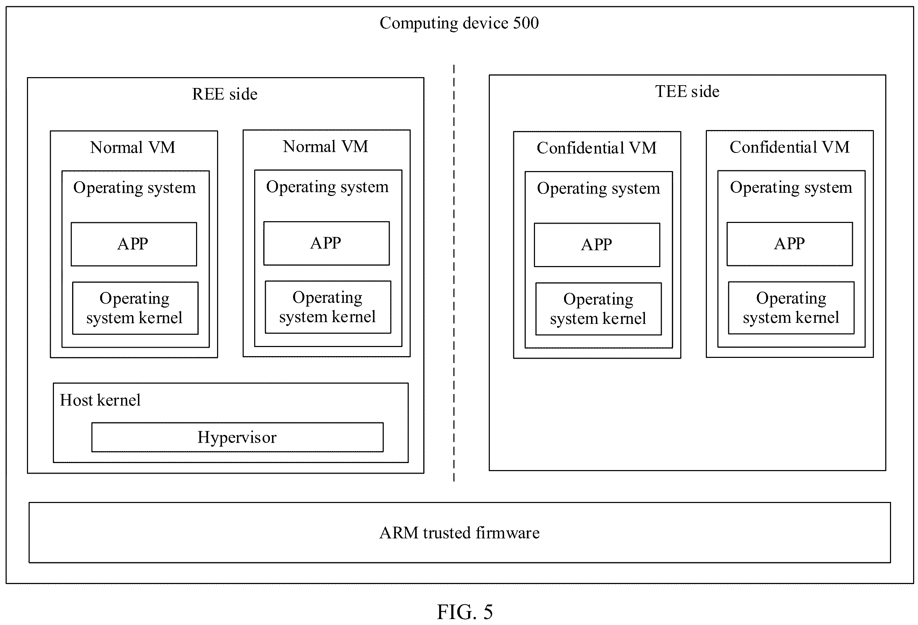

FIG. 5 is a diagram of a computing device 500 according to an embodiment of this application. As shown in FIG. 5, a hardware resource of the computing device 500 is divided into an REE side and a TEE side, and the TEE side includes one or more confidential VMs. In FIG. 5, an example in which the TEE side includes two confidential VMs and the REE side may include one or more normal VMs is used. In FIG. 5, an example in which the REE side includes two normal VMs is used.

The confidential VM is similar to a normal VM in that an operating system is installed in the confidential VM, and the operating system includes an operating system kernel and an APP. The confidential VM may also include a container (container) (not shown in FIG. 5). The operating system installed in the confidential VM may be a rich operating system (rich OS) such as Linux (linux), or may be another type of operating system. This is not limited in this application.

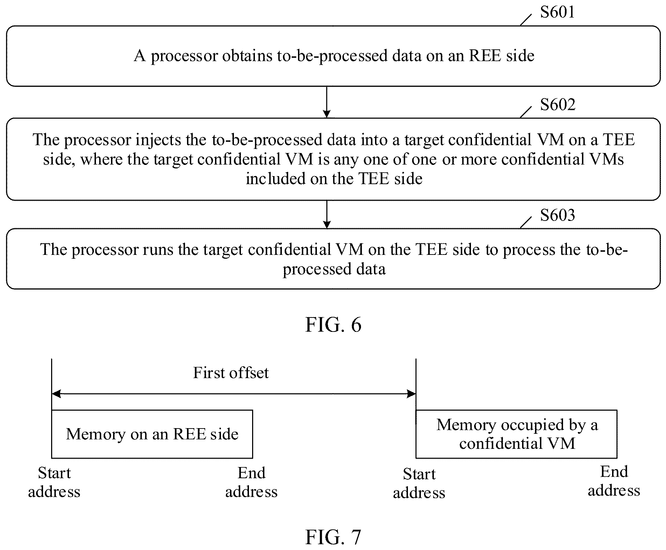

The following describes, with reference to a flowchart of a data processing method according to an embodiment of this application shown in FIG. 6, a process in which the computing device shown in FIG. 5 performs data processing.

As shown in FIG. 6, the method includes the following steps.

S601: A processor obtains to-be-processed data on an REE side.

S602: The processor injects the to-be-processed data into a target confidential VM on a TEE side, where the target confidential VM is any one of one or more confidential VMs included on the TEE side.

S603: The processor runs the target confidential VM on the TEE side to process the to-be-processed data.

The to-be-processed data may be a face image on which facial recognition is to be performed, a speech signal on which speech recognition is to be performed, text data on which text recognition is to be performed, or the like; may be a to-be-trained model and training data; or may be data that is to be encrypted for storage. The to-be-processed data is not specifically limited in this application.

The to-be-processed data may be input by a user to the computing device 500 through an interface provided by the computing device 500. After obtaining the to-be-processed data input by the user, the computing device 500 stores the to-be-processed data in a memory on the REE side. Subsequently, the processor reads the to-be-processed data from the memory on the REE side, and runs the target confidential VM for processing.

In this embodiment, when the to-be-processed data is the face image on which facial recognition is to be performed, the speech signal on which speech recognition is to be performed, or the text data on which text recognition is to be performed, after the processor runs, on the TEE side, the target confidential VM to recognize the face image, the speech signal, or the text data to obtain a corresponding recognition result, the recognition result may be provided to the user on the REE side. When the to-be-processed data is the to-be-trained model and the training data, after running, on the TEE side, the target confidential VM to train the model by using the training data, to obtain the trained model, the processor may provide the trained model to the user on the REE side. In other words, the confidential VM on the TEE side communicates with an external network of the computing device 500 through the REE side. It may be understood that security of the confidential VM can be improved in this way.

When the to-be-processed data is the data that is to be encrypted for storage, the processor only needs to run the target confidential VM on the TEE side to encrypt the data and then store encrypted data in a corresponding location.

It can be learned that in this embodiment of this application, the computing device 500 creates the confidential VM on the TEE side, and runs the confidential VM on the TEE side to process a user service. Because security on the TEE side is higher than that on the REE side, a risk that the confidential VM is maliciously attacked by a hacker is greatly reduced, and security of user data is improved.

It may be understood that, before the computing device 500 performs the data processing method shown in FIG. 6, one or more confidential VMs need to be first created on the TEE side. It may be further understood that, after creating the one or more confidential VMs on the TEE side, the computing device 500 may further manage the one or more confidential VMs, or the like. The following separately describes the foregoing processes in detail.
(1) The computing device 500 creates a confidential VM on the TEE side.

The processor of the computing device 500 obtains, on the REE side, configuration information of a to-be-created confidential VM, and then creates the confidential VM on the TEE side based on the configuration information of the confidential VM. The configuration information includes a specification of the to-be-created confidential VM, for example, a size of a storage, a type of the storage, a size of a memory, a type of the memory, a type of a processor core, a quantity of processor cores, a computing speed of the processor core, a quantity of cores of the processor core, network bandwidth, an operating system kernel, and a file system (file system). When creating the confidential VM, the processor may provide, to the confidential VM based on the configuration information, a virtual hardware resource that matches the configuration information. For example, a memory that matches the memory information and is for use by the confidential VM is obtained by dividing a memory resource on the TEE side based on memory information included in the configuration information, a virtual processor core that matches processor core information and is for use by the confidential VM is obtained through simulation based on processor core information included in the configuration information, and the operating system kernel and the file system that are included in the configuration information are loaded to a memory corresponding to the confidential VM, to create the confidential VM.

A manner in which the processor loads the operating system kernel and the file system to the memory corresponding to the confidential VM may be as follows: The processor determines, on the REE side based on an address of a memory resource on the REE side and a first offset (which is an offset between the address of the memory resource on the REE side and an address of a memory corresponding to the confidential VM, as shown in FIG. 7), the address of the memory corresponding to the confidential VM, and then loads, based on an address corresponding to the confidential VM, the operating system kernel and the file system to the memory corresponding to the confidential VM.

For a manner in which the processor obtains, on the REE side, the configuration information of the confidential VM, refer to either of the following Manner 1 or Manner 2.

Manner 1: The configuration information may be input by the user on an interface of the computing device 500, the user may input, according to a requirement of the user, a type of a processor core, a quantity of processor cores, a computing power requirement of a processor core, a type of a storage, a quantity of storages, a size of a memory, a type of a memory, a network bandwidth requirement, and the like that are required. In this case, the confidential VM may be understood as being customized. After obtaining the configuration information input by the user, the computing device 500 stores the configuration information in the memory on the REE side. Subsequently, the processor obtains the configuration information from the memory on the REE side.

Manner 2: The configuration information may be selected by the user from a plurality of pieces of possible configuration information provided by the interface of the computing device 500. In other words, the user can perform selection only from the plurality of pieces of configuration information, and cannot independently determine a type of a processor core, a quantity of processor cores, a computing power requirement of a processor core, a type of a storage, a quantity of storages, a size of a memory, a type of a memory, a network bandwidth requirement, and the like according to a requirement of the user. In this case, the confidential VM may be understood as being provided according to a specification, and the user can select a specification suitable for the user only from limited specifications. After obtaining the configuration information selected by the user, the computing device 500 stores the configuration information in the memory on the REE side. Subsequently, the processor obtains the configuration information from the memory on the REE side.

It should be noted that the foregoing Manner 1 and Manner 2 are merely examples of manners in which the processor obtains, on the REE side, the configuration information of the confidential VM. For example, the processor may obtain a part of the configuration information of the confidential VM in the foregoing Manner 1, and obtain another part of the configuration information of the confidential VM in the foregoing Manner 2. This is not specifically limited in this application.

(2) The computing device 500 manages the confidential VM:
① The computing device 500 manages a life cycle of the confidential VM.

The processor of the computing device 500 may obtain, on the REE side, a first management command for the life cycle of the confidential VM, and then perform, on the TEE side, one or any combination of the following operations on the confidential VM based on the first management command: power-on, power-off, specification change, migration, and release (destruction).

Specifically, before releasing the confidential VM, the processor may first determine whether the confidential VM is in a non-running state. When determining that the confidential VM is in the non-running state, the processor releases the confidential VM. If determining that the confidential VM is in a running state, the processor waits until running of the confidential VM is completed, and then releases the confidential VM. A specific process in which the processor releases the confidential VM may include operations, for example, erasing context information of the confidential VM, erasing content related to the confidential VM in a memory of the computing device, and releasing a resource occupied by the confidential VM, for example, a memory.

② The computing device 500 manages an APP on the confidential VM.

The processor of the computing device 500 may obtain, on the REE side, a second management command for the confidential VM, and then perform, on the TEE side, one or any combination of the following operations on the confidential VM based on the second management command: installing, starting, closing, upgrading, and uninstalling an APP.

③ The computing device 500 manages the 2-stage page table of the confidential VM.

The processor of the computing device 500 may create, change, or destroy the 2-stage page table of the confidential VM on the TEE side. The 2-stage page table of the confidential VM is a page table in which a VA of the confidential VM is mapped to an IPA and the IPA is mapped to a PA.

④ The computing device 500 manages a context of the confidential VM.

When an exception occurs in the confidential VM, the processor of the computing device 500 establishes the context of the confidential VM on the TEE side, then handles the exception that occurs in the target VM, and after completing handling of the exception, restores the established context of the confidential VM to the confidential VM, to resume running of the confidential VM. The exception that occurs in the confidential VM may be a wait for interrupt (wait for interrupt, WFI), a wait for event (wait for event, WFE), executing a hypervisor call (hypervisor call, HVC) instruction, executing a secure monitor call (secure monitor call, SMC) instruction, reading from or writing to a system register, an instruction abort (instruction abort), a data abort (data abort), an interrupt request (interrupt request, IRQ), a fast interrupt request (fast interrupt request, FIQ), a power management instruction exit of a power state coordination interface (power state coordination interface, PSCI), a system error exit, and the like.

⑤ Before running the confidential VM, the computing device 500 checks integrity of the confidential VM, and checks validity of the computing device 500.

Specifically, the processor may provide, on the REE side, the configuration information of the confidential VM, version information of an operating system installed on the confidential VM, a name of an APP, and the like for the user to perform integrity check, to ensure that the confidential VM meets an expectation of the user.

The processor may provide, on the TEE side, a certificate of the computing device 500 for the user to perform validity check, to ensure that the computing device 500 meets an expectation of the user.

Optionally, if the specification of the confidential VM is changed, before running the confidential VM whose specification is changed, the processor of the computing device 500 may re-determine the validity of the confidential VM whose specification is changed.

⑥ The computing device 500 manages various virtualization functions of the confidential VM.

Before running the confidential VM on the TEE side, the processor of the computing device 500 may further obtain, on the REE side or the TEE side, one or any combination of the following: a virtual interrupt of the confidential VM, a virtual clock for use by the confidential VM, a memory-mapped input/output (memory-mapped input/output, MMI/O) register for use by the confidential VM, and the like, such information is then injected into the confidential VM, and then the target VM is run based on the information. The virtual clock may be used by the confidential VM to measure a time interval. A purpose of measuring the time interval by the confidential VM may be to perform task scheduling. The MMI/O register may be used by the confidential VM to access an I/O device in a same way as accessing a memory.

It may be understood that, if the processor obtains, on the REE side, information such as the virtual interrupt of the confidential VM and the virtual clock for use by the confidential VM, instead of obtaining the information on the TEE side, a trusted computing base (trusted computing base, TCB) on the TEE side may be lighter and thinner.

⑦ The computing device 500 manages communication between the confidential VM and an external network of the computing device 500.

The processor of the computing device 500 may forward, to the confidential VM on the TEE side, a packet that is related to the confidential VM and that is obtained from the external network of the computing device 500 on the REE side, or may provide, to the external network of the computing device 500 by using the REE side, a packet to be sent by the confidential VM to the external network of the computing device 500.

It should be noted that, in addition to the foregoing operations, the processor of the computing device 500 may further perform other operations, for example, creating, modifying, and destroying the 2-stage page table on the REE side. An operation that can be performed by the processor of the computing device 500 is not specifically limited in this application.

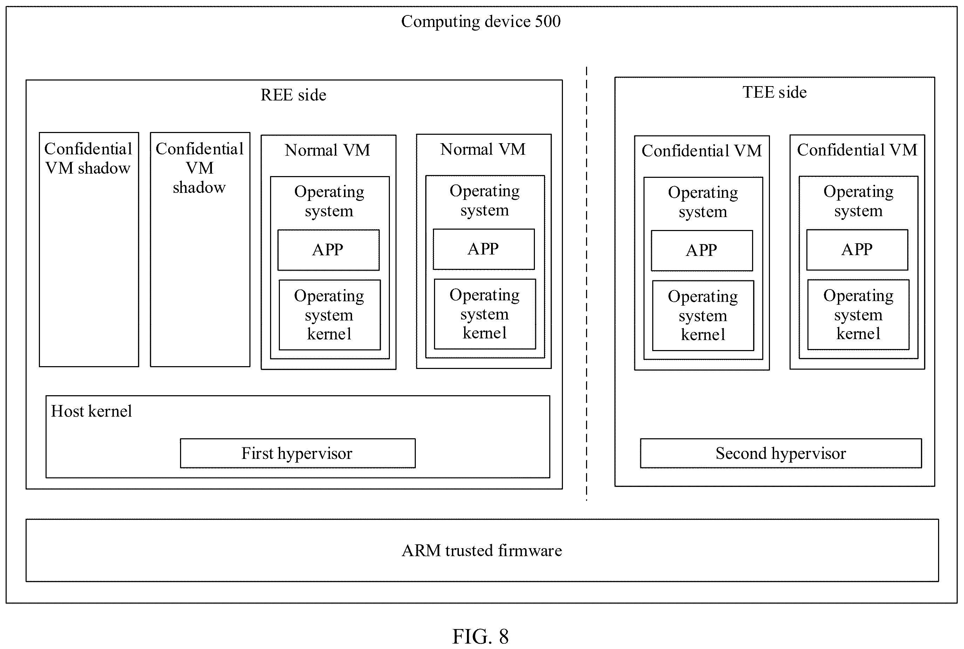

In a possible embodiment, in addition to the confidential VM, the TEE side of the computing device 500 may further include a hypervisor that manages the confidential VM. To distinguish the hypervisor on the TEE side from the foregoing hypervisor on the REE side, in the following embodiments, the hypervisor on the REE side is referred to as a first hypervisor, and the hypervisor on the TEE side is referred to as a second hypervisor, as shown in FIG. 8.

In the computing device 500 shown in FIG. 8, the foregoing operations performed by the processor of the computing device 500 on the REE side may be implemented by the processor by running the first hypervisor on the REE side, and the foregoing operations performed by the processor of the computing device 500 on the TEE side may be implemented by the processor by running the second hypervisor on the TEE side.

In a possible embodiment, as shown in FIG. 8, the REE side may further include a shadow (shadow) of the confidential VM. The shadow of the confidential VM may be used by the processor to store the context of the confidential VM by using the shadow of the confidential VM when the processor stops running the confidential VM and runs another program, and when the processor resumes running of the confidential VM after executing another program, the processor restores, to the confidential VM, the context of the confidential VM that is stored in the shadow of the confidential VM, to resume running of the confidential VM.

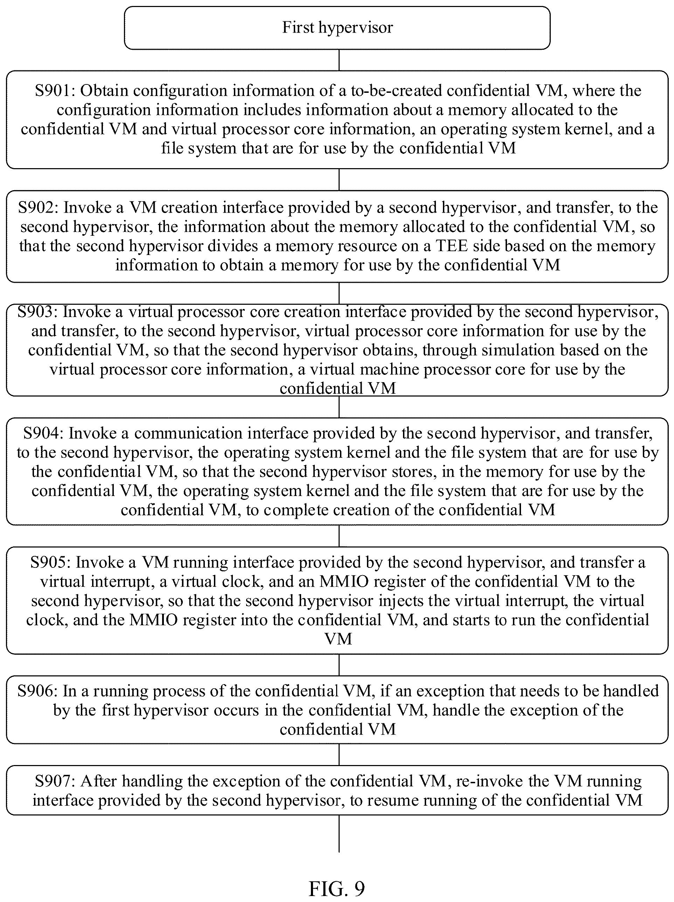

To help understand a process of creating and running a confidential VM more clearly, the following describes a process of creating and running a confidential VM from a perspective of a first hypervisor. As shown in FIG. 9, the process includes the following steps.

S901: The first hypervisor obtains configuration information of a to-be-created confidential VM, where the configuration information includes information about a memory allocated to the confidential VM and virtual processor core information, an operating system kernel, and a file system that are for use by the confidential VM.

The configuration information may further include other content. This is not specifically limited in this application.

S902: The first hypervisor invokes a VM creation interface provided by a second hypervisor, and transfers, to the second hypervisor, the information about the memory allocated to the confidential VM, so that the second hypervisor divides a memory resource on a TEE side based on the memory information to obtain a memory for use by the confidential VM.

S903: The first hypervisor invokes a virtual processor core creation interface provided by the second hypervisor, and transfers, to the second hypervisor, virtual processor core information for use by the confidential VM, so that the second hypervisor simulates, based on the virtual processor core information, a virtual machine processor core for use by the confidential VM.

S904: The first hypervisor invokes a communication interface provided by the second hypervisor, and transfers, to the second hypervisor, the operating system kernel and the file system that are for use by the confidential VM, so that the second hypervisor stores, in the memory for use by the confidential VM, the operating system kernel and the file system that are for use by the confidential VM, to complete creation of the confidential VM.

S905: The first hypervisor invokes a VM running interface provided by the second hypervisor, and transfers a virtual interrupt, a virtual clock, and an MMIO register of the confidential VM to the second hypervisor, so that the second hypervisor injects the virtual interrupt, the virtual clock, and the MMIO register into the confidential VM, and starts to run the confidential VM.

S906: In a running process of the confidential VM, if an exception that needs to be handled by the first hypervisor occurs in the confidential VM, handle the exception of the confidential VM.

S907: After handling the exception of the confidential VM, the first hypervisor re-invokes the VM running interface provided by the second hypervisor, to resume running of the confidential VM.

In a conventional TrustZone usage manner, all of a memory resource of a computing device is statically divided during startup. In other words, the memory resource of the computing device is statically divided into a memory resource on an REE side and a memory resource on a TEE side during startup, in this way, the processor can allocate, to the confidential VM for use, only a fixed-size memory resource on the TEE side that has been divided. When a specific quantity of confidential VMs have occupied all of the memory resource on the TEE side and a new confidential VM needs to be created, the processor can dynamically allocate only a fixed-size memory resource on the TEE side, to spare a part of memory for a new to-be-created confidential VM to use. Therefore, memory management is complex.

In this application, the memory resource of the computing device 500 is not statically divided during startup, and may be dynamically divided by the processor after the computing device 500 is started. When a specific quantity of confidential VMs occupy all of a dynamically divided memory resource on the TEE side and a new confidential VM needs to be created, the processor may dynamically re-divide the memory resource of the computing device 500. In this way, the re-divided memory resource on the TEE side can meet a memory requirement of the created confidential VM, and also meet a memory requirement of the to-be-created new confidential VM, thereby effectively reducing memory management complexity.

Optionally, when a specific quantity of confidential VMs have occupied all of a dynamically divided memory resource on the TEE side and a new confidential VM needs to be created, the processor may also determine whether there is a free memory in the memory resource on the REE side, and when there is the free memory, a part or all of the free memory is allocated to the TEE side. Then a memory that can be used by the new confidential VM is allocated from the part or all of the free memory on the TEE side. In this way, memory management complexity can also be reduced.

In specific implementation, the operation of dividing the memory resource of the computing device 500 by the processor may be performed by the processor by running the first hypervisor on the REE side shown in FIG. 8.

It should be understood that sequence numbers of the steps do not mean an execution sequence in the foregoing embodiments. The execution sequence of the processes should be determined based on functions and internal logic of the processes, and should not constitute any limitation on the implementation processes of embodiments of this application.

The foregoing describes in detail the data processing method provided in this application. Based on a same inventive concept, the following continues to describe a data processing apparatus and a computing device provided in this application.

It should be understood that unit modules in the data processing apparatus may also be divided in a plurality of manners. The modules may be software modules or may be hardware modules, or a part of the modules may be software modules and the other part of the modules may be hardware modules. This is not limited in this application. When the data processing apparatus includes a plurality of unit modules, the plurality of unit modules may be deployed on a same computing device, or may be deployed on different computing devices. This is not specifically limited in this application.

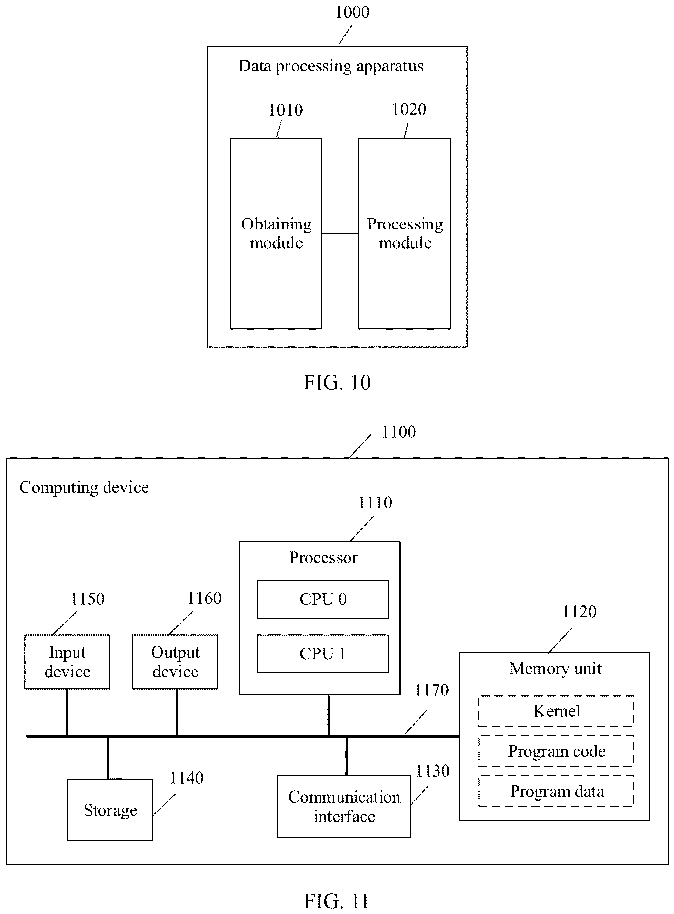

FIG. 10 is a diagram of a structure of an example of a data processing apparatus 1000 according to an embodiment of this application. The data processing apparatus 1000 may be used in the computing device 500, shown in FIG. 5, whose hardware resource is divided into an REE side and a TEE side. As shown in FIG. 10, the data processing apparatus 1000 includes an obtaining module 1010 and a processing module 1020. The following describes functions of the modules of the data processing apparatus 1000 by using examples. It should be understood that the functions of the modules described in the following examples are merely functions that the data processing apparatus 1000 may have in some embodiments of this application, and the functions of the modules are not limited in this application.

The obtaining module 1010 is configured to obtain to-be-processed data on the REE side.

The processing module 1020 is configured to run a target VM (namely, the target confidential VM) on the TEE side to process the to-be-processed data, where the target VM is any one of one or more VMs (namely, confidential VMs) included on the TEE side.

In a possible embodiment, the obtaining module 1010 is configured to obtain, on the REE side, configuration information of a to-be-created target VM. The processing module 1020 is configured to create the target VM on the TEE side based on the configuration information.

In a possible embodiment, the processing module 1020 is configured to obtain the first data through simulation on the REE side, where the first data includes one or any combination of the following: a virtual interrupt of the target VM, a virtual clock for use by the target VM, and a memory-mapped input/output MMIO register for use by the target VM. The processing module 1020 is configured to inject the first data into the target VM. The processing module 1020 is configured to run the target VM on the TEE side based on the first data.

In a possible embodiment, the data processing apparatus 1000 further includes a first verification module 1030 (not shown in FIG. 10), configured to determine integrity of the target VM.

In a possible embodiment, the data processing apparatus 1000 further includes a second verification module 1040 (not shown in FIG. 10), configured to determine validity of the computing device 500 to which the data processing apparatus 1000 belongs.

In a possible embodiment, when a specification of the target VM is changed, the first verification module 1030 is further configured to determine validity of the target VM whose specification is changed.

In a possible embodiment, the obtaining module 1010 is configured to obtain, on the REE side, a first management command for a life cycle of the target VM. The processing module 1020 is configured to perform, on the TEE side based on the first management command, one or any combination of the following operations on the target VM: power-on, power-off, specification change, migration, and release.

In a possible embodiment, the obtaining module 1010 is configured to obtain, on the REE side, a second management command for the target VM. The processing module 1020 is configured to perform, on the TEE side based on the second management command, one or any combination of the following operations on the target VM: installing, starting, closing, upgrading, and uninstalling an APP.

In a possible embodiment, the processing module 1020 is configured to: when an exception occurs in the target VM, establish a context of the target VM on the TEE side; handle the exception that occurs in the target VM; and after completing handling of the exception that occurs in the target VM, restore the context of the target VM to the target VM, to resume running of the target VM.

In a possible embodiment, the processing module 1020 is configured to perform one or any combination of the following operations on the TEE side: creating, altering, or destroying a 2-stage page table of the target VM, where the 2-stage page table of the target VM is a page table in which a virtual address of the target VM is mapped to an intermediate address and the intermediate address is mapped to a physical address.

In a possible embodiment, the processing module 1020 is configured to provide, on the REE side, a processing result for a user, where the processing result is obtained by the processor by running the target VM on the TEE side to process the to-be-processed data.

In a possible embodiment, the configuration information includes information about a memory allocated to the target VM and virtual processor core information, an operating system kernel, and a file system that are for use by the target VM. The processing module 1020 is specifically configured to: divide a memory resource on the TEE side to obtain a first memory that matches the memory information and is for use by the target VM, obtain, through simulation on the TEE side, a virtual processor core that matches the virtual processor core information and is for use by the target VM, and store, in the first memory, the operating system kernel and the file system for use by the target VM.

In a possible embodiment, the processing module 1020 is specifically configured to: determine, on the REE side, an address of the first memory based on an address of a memory resource on the REE side and a first offset, where the first offset is an offset between the address of the memory resource on the REE side and the address of the first memory; and store, on the TEE side in the first memory based on the address of the first memory, the operating system kernel and the file system for use by the target VM.

In a possible embodiment, the processing module 1020 is further configured to divide a memory resource of the computing device 500 to obtain a memory resource on the TEE side.

Specifically, for specific implementation of performing various operations by the data processing apparatus 1000, refer to descriptions in related content in the foregoing embodiments of the data processing method. For brevity of this specification, details are not described herein again.

FIG. 11 is a diagram of a structure of a computing device 1100 according to an embodiment of this application. The computing device 1100 includes a processor 1110, a memory unit 1120, a communication interface 1130, a storage 1140, an input device 1150, and an output device 1160. The processor 1110, the memory unit 1120, the communication interface 1130, the storage 1140, the input device 1150, and the output device 1160 may be connected to each other by using a bus 1170.

The processor 1110 may read program code (including instructions) stored in the memory unit 1120, and execute the program code stored in the memory unit 1120, so that the computing device 1100 performs the steps in the data processing method provided in the foregoing method embodiments.

The processor 1110 may have a plurality of specific implementation forms. For example, the processor 1110 may be at least one central processing unit (central processing unit, CPU). As shown in FIG. 11, the processor 1110 includes a CPU 0 and a CPU 1. Alternatively, the processor 1110 may be a graphics processing unit (graphics processing unit, GPU). The processor 1110 may alternatively be a single-core processor or a multi-core processor. The processor 1110 may be a combination of a CPU and a hardware chip. Optionally, the hardware chip may be implemented by using an application-specific integrated circuit (application-specific integrated circuit, ASIC) or a programmable logic device (programmable logic device, PLD). The PLD may be implemented by a complex programmable logical device (complex programmable logical device, CPLD), a field-programmable gate array (field-programmable gate array, FPGA), generic array logic (generic array logic, GAL), or any combination thereof. The processor 1110 may alternatively be implemented independently by using a logic device with built-in processing logic, for example, an FPGA or a digital signal processor (digital signal processor, DSP).

The memory unit 1120 is configured to store a kernel, program code, and program data generated when the processor 1110 executes the program code stored in the memory unit 1120. The program code includes code of the obtaining module 1010, code of the processing module 1020, and the like. The program data includes the to-be-processed data, the configuration information of the confidential VM, a processing result obtained after the confidential VM processes the to-be-processed data, and the like.

The communication interface 1130 may be a wired interface (for example, an Ethernet interface, an optical fiber interface, or an interface of another type (for example, an infiniBand (infiniBand, IB) interface)) or a wireless interface (for example, a cellular network interface or a wireless local area network interface), and is configured to communicate with another computing device or apparatus. When the communication interface 1130 is a wired interface, the communication interface 1130 may use a transmission control protocol/internet protocol (transmission control protocol/internet protocol, TCP/IP) suite, for example, a remote function call (remote function call, RFC) protocol, a simple object access protocol (simple object access protocol, SOAP) protocol, a simple network management protocol (simple network management protocol, SNMP) protocol, a common object request broker architecture (common object request broker architecture, CORBA) protocol, and a distributed protocol.

The storage 1140 may be a non-volatile memory, for example, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The storage 1140 may alternatively be a volatile memory. The volatile memory may be a random access memory (random access memory, RAM), and is used as an external cache.

The input device 1150 may include a mouse, a keyboard, and the like. A user may input data or an instruction, for example, the to-be-processed data, the configuration information of the confidential VM, the first management instruction, or the second management instruction, to the computing device 1100 by using the input device 1150.

The output device 1160 may include a display. The output device 1160 may provide data to a user by using the display, for example, provide the user with a result obtained after the confidential VM processes the to-be-processed data, as described above. The display may include a cathode ray tube (cathode ray tube, CRT) display, a plasma display panel (plasma display panel, PDP), a liquid crystal display (liquid crystal display, LCD), and the like. For example, the display is an LCD. The liquid crystal display includes a liquid crystal panel and a backlight module. The liquid crystal display panel includes a polarization film, a glass substrate, a black matrix, a color filter, a protective film, a common electrode, a calibration layer, a liquid crystal layer (liquid crystal, a spacer, and a sealant), a capacitor, a display electrode, a prism layer, and a light diffusion layer. The backlight module includes an illumination light source, a reflection panel, a light guide panel, a diffusion sheet, a brightness enhancement film (prism sheet), a frame, and the like.

The bus 1170 may be a peripheral component interconnect express (peripheral component interconnect express, PCIe) bus, an extended industry standard architecture (extended industry standard architecture, EISA for short) bus, or the like. The bus 1170 may be classified into an address bus, a data bus, a control bus, and the like. For ease of representation, only one bold line is used to represent the bus in FIG. 11, but this does not mean that there is only one bus or only one type of bus.

It should be understood that the computing device 1100 according to this embodiment of this application may correspond to the computing device including the data processing apparatus 1000 in embodiments of this application, and may correspond to a corresponding entity that performs the method shown in FIG. 6 in embodiments of this application, and operations and/or functions of the modules in the computing device 1100 are separately used to implement corresponding processes of the method shown in FIG. 6. For brevity, details are not described herein again.

It should be understood that the computing device 1100 is merely an example provided in embodiments of this application. In addition, the computing device 1100 may have more or fewer components than those shown in FIG. 11, may combine two or more components, or may have different component configurations.

This application further provides a computer-readable storage medium. The computer-readable storage medium stores instructions. When the instructions are run, a part or all of the steps of the data processing method recorded in the foregoing embodiments may be implemented.

This application further provides a computer program product. When the computer program product is read and executed by a computer, a part or all of the steps of the data processing method recorded in the foregoing method embodiments may be implemented.

In the foregoing embodiments, the description of each embodiment has respective focuses. For a part that is not described in detail in an embodiment, reference may be made to related descriptions in other embodiments.

All or some of the foregoing embodiments may be implemented by using software, hardware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium, a semiconductor medium, or the like.

The foregoing descriptions are merely specific implementations of this application. Any variation or replacement readily figured out by a person skilled in the art based on the specific implementations provided in this application shall fall within the protection scope of this application.

## Claims

1. A data processing method, applied to a computing device, wherein a hardware resource of the computing device is divided into a rich execution environment REE side and a trusted execution environment TEE side, and the method comprises:
obtaining, by a processor, to-be-processed data on the REE side; and
running, by the processor, a target virtual machine VM on the TEE side to process the to-be-processed data, wherein the target VM is any one of one or more VMs comprised on the TEE side.

2. The method according to claim 1, wherein before obtaining, by the processor, the to-be-processed data on the REE side, the method further comprises:
obtaining, by the processor on the REE side, configuration information of a to-be-created target VM; and
creating, by the processor, the target VM on the TEE side based on the configuration information.

3. The method according to claim 1 or 2, wherein the method further comprises:
obtaining, by the processor, first data through simulation on the REE side, wherein the first data comprises one or any combination of the following: a virtual interrupt of the target VM, a virtual clock for use by the target VM, and a memory-mapped input/output MMIO register for use by the target VM; and
injecting, by the processor, the first data into the target VM; and
running, by the processor, the target VM on the TEE side comprises:
running, by the processor, the target VM on the TEE side based on the first data.

4. The method according to any one of claims 1 to 3, wherein before running, by the processor, the target VM on the TEE side, the method further comprises:
determining, by the processor, integrity of the target VM.

5. The method according to any one of claims 1 to 4, wherein before running, by the processor, the target VM on the TEE side, the method further comprises:
determining, by the processor, validity of the computing device.

6. The method according to claim 4 or 5, wherein when a specification of the target VM is changed, the method further comprises:
determining, by the processor, validity of the target VM whose specification is changed.

7. The method according to any one of claims 1 to 6, wherein the method further comprises:
obtaining, by the processor on the REE side, a first management command for a life cycle of the target VM; and
performing, by the processor on the TEE side based on the first management command, one or any combination of the following operations on the target VM: power-on, power-off, specification change, migration, and release.

8. The method according to any one of claims 1 to 7, wherein the method further comprises:
obtaining, by the processor, a second management command for the target VM on the REE side; and
performing, by the processor on the TEE side based on the second management command, one or any combination of the following operations on the target VM: installing an application, starting the application, closing the application, upgrading the application, and uninstalling the application.

9. The method according to any one of claims 1 to 8, wherein the method further comprises:
when an exception occurs in the target VM, establishing, by the processor, a context of the target VM on the TEE side;
handling, by the processor, the exception that occurs in the target VM; and
after the processor completes handling of the exception that occurs in the target VM, restoring, by the processor, the context of the target VM to the target VM, to resume running of the target VM.

10. The method according to any one of claims 1 to 9, wherein the method further comprises:
performing, by the processor, one or any combination of the following operations on the TEE side:
creating, altering, or destroying a 2-stage page table of the target VM, wherein the 2-stage page table of the target VM is a page table in which a virtual address of the target VM is mapped to an intermediate address and the intermediate address is mapped to a physical address.

11. The method according to any one of claims 1 to 10, wherein the method further comprises:
providing, by the processor on the REE side, a processing result for a user, wherein the processing result is obtained by the processor by running the target VM on the TEE side to process the to-be-processed data.

12. The method according to any one of claims 2 to 11, wherein the configuration information comprises information about a memory allocated to the target VM and virtual processor core information, an operating system kernel, and a file system that are for use by the target VM; and
creating, by the processor, the target VM on the TEE side based on the configuration information comprises:
dividing, by the processor, a memory resource on the TEE side to obtain a first memory that matches the memory information and is for use by the target VM;
obtaining, by the processor through simulation on the TEE side, a virtual processor core that matches the virtual processor core information and is for use by the target VM; and
storing, by the processor, the operating system kernel and the file system in the first memory.

13. The method according to claim 12, wherein storing, by the processor, the operating system kernel and the file system in the first memory comprises:
determining, by the processor on the REE side, an address of the first memory based on an address of a memory resource on the REE side and a first offset, wherein the first offset is an offset between the address of the memory resource on the REE side and the address of the first memory; and
storing, by the processor on the TEE side, the operating system kernel and the file system in the first memory based on the address of the first memory.

14. The method according to claim 12 or 13, wherein before dividing, by the processor, the memory resource on the TEE side to obtain the first memory that matches the first memory information and is for use by the target VM, the method further comprises:
dividing, by the processor, a memory resource of the computing device to obtain a memory resource on the TEE side from.

15. The method according to any one of claims 1 to 14, wherein a first hypervisor is deployed on the REE side, a second hypervisor is deployed on the TEE side, an operation performed by the processor on the REE side is performed by the processor by running the first hypervisor, and an operation performed by the processor on the TEE side is performed by the processor by running the second hypervisor.

16. A computing device, wherein the computing device comprises a processor and a storage, and the processor of the computing device is configured to execute instructions stored in the storage of the computing device, to cause the computing device to perform the method according to any one of claims 1 to 15.

17. A computer-readable storage medium, comprising computer program instructions, wherein when the computer program instructions are executed by a computing device, the computing device performs the method according to any one of claims 1 to 15.
